# EUROPÄISCHE PATENTSCHRIFT

(11) **EP 2 021 660 B1**
(45) Veröffentlichungstag und Bekanntmachung des Hinweises auf die Patenterteilung: **17.07.2013**
(21) Anmeldenummer: 07723269.2
(22) Anmeldetag: 14.03.2007
(51) Int. Cl.: F16J 15/06, F16J 15/38

(54) **GLEITRINGDICHTUNGSANORDNUNG MIT TRÄGERRING UND GLEITRING**
SLIDING RING SEAL ARRANGEMENT WITH SUPPORT RING AND SLIDING RING
GARNITURE MÉCANIQUE D'ÉTANCHÉITÉ AVEC BAGUE DE SUPPORT ET ANNEAU DE GLISSEMENT

(30) Priorität: 31.05.2006 DE 202006008635 U
(43) Veröffentlichungstag der Anmeldung: 11.02.2009
(73) Patentinhaber: EagleBurgmann Germany GmbH & Co. KG, 82515 Wolfratshausen (DE)
(72) Erfinder: SVEJKOVSKY, Reinhard, 82538 Geretsried (DE); RIES, Wolfgang, 82438 Eschenlohe (DE); Woppowa, Robert, 82515 Wolfratshausen (DE)
(74) Vertreter: Schaeberle, Steffen
(86) Internationale Anmeldenummer: PCT/EP2007/002267
(87) Internationale Veröffentlichungsnummer: WO 2007/137640

(56) Entgegenhaltungen:
- EP-A1- 0 525 410
- EP-A2- 1 353 099
- DE-U1- 20 202 177
- FR-A- 1 069 590
- GB-A- 697 134
- GB-A- 2 082 269

## Beschreibung

Die Erfindung betrifft eine Gleitringdichtungsanordnung mit einem Trägerring und einem Gleitring.

Die Erfindung betrifft insbesondere eine Verbesserung bei Gleitringdichtungsanordnungen zum Einsatz in der Steriltechnik, z.B. Medizintechnik oder Lebensmittelverarbeitung. Bei derartigen Anwendungen geht es häufig um die Abdichtung von Fluiden mit einem besonders hohen Reinheitsgrad, wie z.B. sog. Reinstwasser, bei denen durch die Gleitringdichtungsanordnung keine Beeinträchtigung des Reinheitsgrades bewirkt werden sollte. Eine in diesem Sinne wirksame Massnahme ist die weitestgehende Vermeidung von Ablagerungen an den dem Fluid ausgesetzten Bereichen der Gleitringdichtungsanordnung, z.B. die Vermeidung von Toträumen. Zwar ist es bei Gleitringdichtungsanordnungen bekannt, den rotierenden Gleitring durch Pressitz, Klebung oder Lötung in einem federvorgespannten Trägergehäuse zu montieren, doch erweisen sich diese totraumreduzierenden Verbindungstechniken wegen der speziellen bei Sterilanwendungen für Teile der Gleitringdichtungsanordnung häufig zum Einsatz kommenden Materialien mit sehr geringem Ferritgehalt als nicht praktikabel. Eine Kraftübertragung (DE 202 02 177 U1) zwischen Trägergehäuse und Gleitring mittels in Ausnehmungen des Gleitringes eingreifender Mitnehmerstifte am Trägergehäuse erweist sich bei manchen Anwendungsfällen in der Steriltechnik als nachteilig, indem dadurch nicht nur unerwünschte Toträume gebildet werden, sondern auch keine ausreichende Abfuhr von Wärme vom Gleitring gewährleistet ist und daher häufig Überhitzung festgestellt wurde. Diese kann nach kurzer Zeit zu einem Ausfall der Gleitringdichtungsanordnung führen. Wegen der schlechten bzw. fehlenden Schmierwirkung von Reinstwasser ist die thermische Beanspruchung der Gleitringe gross. Die DE 20 202 177 U1 offenbart eine Gleitringdichtung gemäß dem Oberbegriff des Anspruches 1. Ferner zeigen die FR 1 069 590 A und die GB 697 134 A statische profilierte Dichtringe für Rohre.

Der Erfindung liegt die Aufgabe zugrunde, die erwähnten Schwierigkeiten bei der Anwendung von Gleitringdichtungsanordnungen der vorerwähnten Art zu vermeiden. Insbesondere soll durch die Erfindung eine Gleitringdichtung mit einem Trägerring und einem Gleitring geschaffen werden mit besonderer Eignung zum Einsatz in der Steriltechnik, insbesondere in Gegenwart schlecht bis nicht schmierender abzudichtender Fluide.

Diese Aufgabe wird erfindungsgemäss durch die Merkmale des Patentanspruchs 1 gelöst. Bezüglich der mit der Erfindung erzielten Vorteile und besonderen Wirkungen kann auf die nachfolgende Beschreibung einer Ausführungsform verwiesen. Die Erfindung löst die vorgenannte Aufgabe in wirksamer Weise mit überraschend einfachen Mitteln, wodurch der Aufbau und die Montage einer Gleitringdichtungsanordnung vereinfacht sind. Zwar ist es aus der DE 102 16 140 A bekannt, einen Gleitring mittels eines Mitnehmerringes aus nachgiebigem Material an einem Gehäuse zu montieren und hat der Mitnehmerring an der dem Gleitring zugewandten Eingriffsfläche eine wellenförmige Profilierung, doch hat diese keine mit den Merkmalen des Patentanspruches 1 korrespondierende Ausbildung der Erhebungen und Täler, so dass mit dieser Anordnung nicht die durch die Erfindung erzielten vorteilhaften Wirkungen für den Einsatz in der Steriltechnik erreicht werden können.

Die Erfindung wird nachfolgend anhand einer Ausführungsform und der Zeichnung näher erläutert. Es zeigen:
- Fig. 1: in längsgeschnittener Teilansicht eine Gleitringdichtungsanordnung gemäss einer Ausführungsform der Erfindung, und
- Fig. 2: eine vergrösserte Querschnittsansicht einer bevorzugten Ausführungsform eines bei der Gleitringdichtungsanordnung nach Fig. 1 vorgesehenen Mitnehmerringes.

Obschon die Erfindung vorzugsweise in Verbindung mit der Steriltechnik, insbesondere zur Abdichtung von Reinstwasser zur Anwendung kommt, versteht es sich, dass die Erfindung auf dieses Anwendungsgebiet nicht beschränkt ist, sondern grundsätzlich bei Gleitringdichtungen schlechthin vorteilhaft angewendet werden kann.

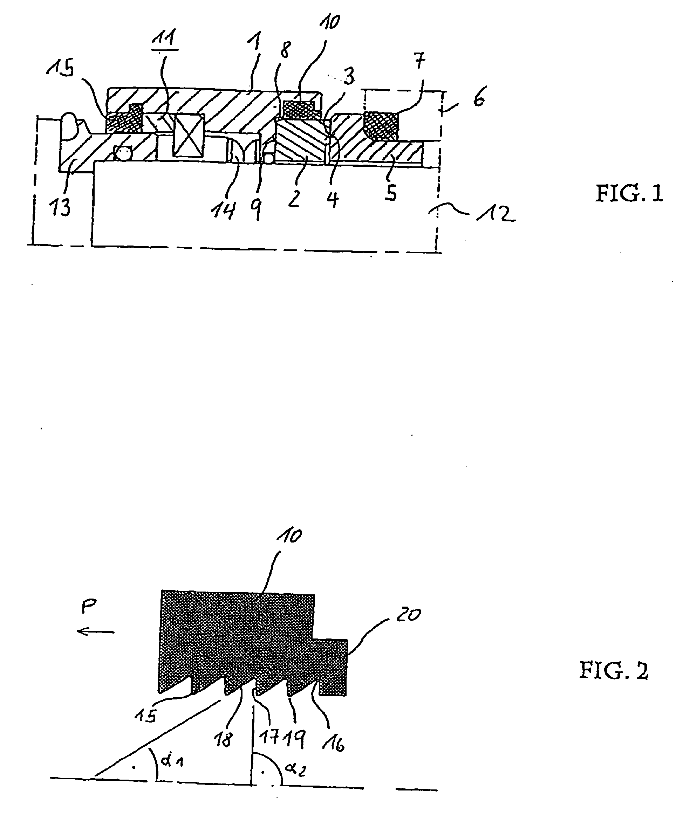

Mit dem Bezugszeichen 1 in Fig. 1 ist ein im Wesentlichen rohrförmiges Trägergehäuse 1 gezeigt, das vorzugsweise eine feingeschliffene oder polierte äussere Umfangsfläche hat, die frei von Einkerbungen oder Absätzen ist, an denen sich Ablagerungen bilden könnten. Ein am Trägergehäuse 1 gehaltener Gleitring 2 hat eine Gleit- oder Dichtfläche 3, die mit einer ebensolchen Fläche 4 eines stationären Gleitringes 5 zusammenwirkt, um einen Bereich aussenumfänglich der Dichtflächen 3, 4 gegenüber einem Raum innenumfänglich abzudichten. Der Gleitring 5 ist an einem Welldurchtrittsbereich eines Gehäuses 6 einer abzudichtenden Gerätschaft, z.B. Pumpe (nicht gezeigt) drehfest gehalten, wobei ein Sekundärdichtungselement 7 eine Abdichtung zwischen dem Gehäuse 6 und dem Gleitring 5 schafft. Geeignete Sekundärdichtungselemente für steriltechnische Anwendungen sind dem Fachmann bekannt, so dass sich eine nähere Erläuterung erübrigt.

Seitens eines axialen Endes des Trägergehäuses 1 (in der Zeichnung rechtsseitigen Endes) ist darin eine Aussparung 8 eingebracht, die eine ebene radiale Endfläche 9 hat und einen äusseren Umfang (nicht bezeichnet), in den eine Nut zur Aufnahme eines Mitnehmerringes 10 eingebracht ist.

Seitens des anderen axialen Endes (in der Zeichnung linksseitigen Endes) ist eine weitere Aussparung zur Anordnung und Montage einer Drehkraftübertragungseinrichtung vorgesehen, die das allgemeine Bezugszeichen 11 trägt und hier mit weiteren Details nicht näher beschrieben werden braucht. Darauf hinzuweisen ist lediglich, dass die Drehkraftübertragungseinrichtung 11 bewirkt, dass ein auf einem rotierenden Bauteil 12, z.B. einer Pumpenwelle, drehfest aufgesetzter Montagering 13 mit dem Trägergehäuse 1 so verknüpft, dass eine Drehung der Welle 12 bzw. des Montageringes 13 eine ebensolche Drehung des Trägergehäuses 1 bewirkt.

Zwischen dem Montagering 13 und dem Trägergehäuse 1 ist ferner eine Vorspannfeder 14, z.B. Wellfeder, angeordnet, die bewirkt, dass das Trägergehäuse 1, das gegenüber dem Montagering 13 axial beweglich ist, gegen den stationären Gleitring 5 vorgespannt ist, um die zusammenwirkenden Dichtflächen 3, 4 der Gleitringe 2, 5 in einem dichtenden Eingriff miteinander zu halten. Zum näheren Aufbau von Wellfedern kann auf BURGMANN, ABC der Gleitringdichtung, 1988, Selbstverlag, Seite 80 verwiesen werden. Ein weiteres Sekundärdichtungselement 15 ist vorgesehen, um eine Abdichtung zwischen dem Montagering 13 und dem Trägergehäuse 1 zu schaffen.

Der Mitnehmerring 10 ist in Fig. 2 mit weiteren Details dargestellt. Der Mitnehmerring 10 stellt ein Formteil aus einem nachgiebigen Material, wie einem Elastomer dar, und weist, wie gezeigt, an seinem inneren dem Gleitring 2 zugewandten Umfang eine wellen- oder sägezahnartigeartige Profilierung auf, bestehend aus einer Vielzahl axial in Abstand voneinander angeordneten, umfänglich sich erstreckenden Erhebungen 15 und zwischen benachbarten Erhebungen vorgesehenen Tälern 16.

Jede Erhebung hat eine in Richtung des Pfeiles P in Fig. 2 voreilende Flanke 17 und eine nacheilende Flanke 18, wobei ein Winkel α₂ der voreilenden Flanke 17 grösser als derjenige α₁ der nacheilenden Flanke 18 ist. Der Winkel α₁ kann zwischen 15° und 60° betragen, wobei ein Wert α₁ von 45° bevorzugt wird. Der Winkel α₂ kann zwischen 80° und 110° betragen, wobei ein Wert von 90° bevorzugt wird. Die Winkel α₁, α₂ stellen jeweils den von einer Tangente an die betreffende Flanke 17, 18 und einer Mittenlangsachse des Mitnehmerringes 10 eingeschlossenen Öffnungswinkel entgegen der Richtung des Pfeiles P dar.

Die äusseren Kuppen 19 der Erhebungen 15, die einen Übergang zwischen der nacheilenden und der voreilenden Flanke schaffen, sind vorzugsweise abgerundet, jedoch könnte auch ein anderweitig gestalteter Übergang vorgesehen sein. Wenn erwünscht könnten die Flanken 17, 18 auch unmittelbar aufeinander stossen.

Ein am äusseren Durchmesser verringerter Ansatzbereich 20 steht von einem axialen Ende des Mitnehmerelementes 10 ab und erstreckt sich in eine äussere Zutrittsbohrung (nicht gezeigt) zu der den Mitnehmerring 10 im Trägergehäuse 1 aufnehmenden Aussparung 8, wie dies in Fig. 1 gezeigt ist. Der innere Umfang des Ansatzbereiches 20 kann, wenn erwünscht, ebenfalls eine Profilierung der vorgenannten Art aufweisen oder, wie in Fig. 2 dargestellt ist, glattzylindrisch ausgebildet sein.

Der von den Kuppen 19 der Erhebungen 15 umschriebene Kreis hat einen Durchmesser, der auf den Durchmesser des äusseren Umfanges des Gleitringes 2 so abgestimmt ist, dass, wenn der Gleitring 2 in Richtung des Pfeiles P in den Mitnehmerring 10 unter einer geeigneten äusseren axialen Montagekraft bewegt wird, die Erhebungen 15 in radialer Richtung etwas verformt oder gestaucht werden, wodurch eine kraftschlüssige Eingriffnahme des Mitnehmerringes 10 mit dem äusseren Umfang des Gleitringes 2 zustande kommt. Vorzugsweise erfahren die Erhebungen 15 gleichzeitig eine radiale und axiale Verformung, um eine Verdrängung von Material der Erhebungen 15 in die benachbarten Täler 16 zu bewirken, so dass im Montagezustand die Täler 16 ganz oder weitgehend ausgefüllt werden und eine visuell wahrnehmbare Unterscheidung zwischen Tälern 16 und Erhebungen 15 wegfallen kann.

Der Gleitring 2 kann im Mitnehmerring 10 vorgeschoben werden, bis seine von der Dichtfläche 3 abgewandte radiale Stirnfläche in Anlage mit der Anlagefläche 9 der Aussparung 8 des Trägergehäuses 1 kommt. Diese Anlagebeziehung bleibt dank der erfindungsgemässen Ausbildung der Erhebungen 15 unverändert erhalten, selbst wenn die äusseren Montagekräfte von dem Gleitring weggenommen werden. Die enge anliegende Beziehung zwischen den benachbarten Flächen des Gleitringes 9 und Trägergehäuses 1 ermöglicht eine wirksame Wärmeübertragung vom Gleitring 2 auf das Trägergehäuse 1, um eine Überhitzung des Gleitringes 2 beim Betrieb zu vermeiden. Gleichzeitig ermöglicht der Mitnehmerring 10 eine sichere und einfache Steckmontage des Gleitringes 2 am Trägergehäuse 1 und eine schlupffreie Übertragung eines Drehmomentes vom Trägergehäuse 1 auf den Gleitring 2.

## Patentansprüche

1. Gleitringdichtungsanordnung umfassend einen Gleitring (2) und einen Trägerring (1), wobei der Trägerring (1) eine seitens eines seiner axialen Enden eingebrachte Aussparung zur dichtenden Aufnahme und kraftschlüssigen Montage des Gleitringes aufweist, **dadurch gekennzeichnet, dass** in der Aussparung ein Mitnehmerring (10) aus einem nachgiebigen Material mit einer wellenförmigen Profilierung an seinem inneren Umfang gehalten ist, wobei wenigstens die Erhebungen (15) der wellenförmigen Profilierung in kraftschlüssigem Eingriff mit dem äusseren Umfang des Gleitringes (2) bringbar sind, wenn der Gleitring (2) unter einer äusseren Montagekraft in den Mitnehmerring (10) bewegt wird, wobei jede Erhebung (15) eine in Richtung (P) der Montagebewegung voreilende Flanke (17) mit einem grösseren Neigungswinkel α₂ als derjenige α₁ einer nacheilenden Flanke hat, worin α_{1,} α₂ die von einer Tangente an die betreffende Flanke und der Mittenlangsachse des Mitnehmerringes (10) eingeschlossenen Öffnungswinkel entgegen der Montagebewegungsrichtung (P) bedeuten und wobei der Mitnehmerring (10) eingerichtet ist, eine sichere und einfache Steckmontage des Gleitrings (2) am Trägerring (1) und eine schlupffreie Übertragung eines Drehmoments vom Trägerring (1) auf den Gleitring (2) zu ermöglichen.

2. Gleitringdichtungsanordnung nach Anspruch 1, **dadurch gekennzeichnet, dass** der Mitnehmerring aus einem elastomeren Material besteht.

3. Gleitringdichtungsanordnung nach Anspruch 1, **dadurch gekennzeichnet, dass** der Winkel α₁ zwischen 15° und 60°, vorzugsweise 45° und der Winkel α₂ zwischen 80° und 110°, vorzugsweise 90° beträgt.

4. Gleitringdichtungsanordnung nach Anspruch 1, **dadurch gekennzeichnet, dass** die Erhebungen (15) abgerundete Kuppen (19) haben.

5. Gleitringdichtungsanordnung nach Anspruch 1, **dadurch gekennzeichnet, dass** die Aussparung eine radiale Anlagefläche aufweist, mit der eine Stirnfläche des Gleitringes (2) in flächiger wärmeübertragender Anlagebeziehung steht.

6. Gleitringdichtungsanordnung nach Anspruch 1, **dadurch gekennzeichnet, dass** die Erhebungen (15) unter der Wirkung der äusseren Montagekraft in benachbarte Täler (16) verformbar sind.

## Claims

1. A mechanical seal assembly comprising a seal ring (2) and a support ring (1), the support ring (1) comprising a recess inserted at a side of one of its axial ends for a sealing receipt and force-fit assembly of the seal ring, **characterized in that** an engaging ring (10) made of a flexible material and having a corrugated profile at its inner periphery is retained in the recess, wherein at least the elevations (15) of the corrugated profile are configured to be brought into a force-fit engagement with an outer periphery of the seal ring (2) when the seal ring (2) is moved into the engaging ring (10) by an external mounting force, each elevation (15) having a leading flank (17) in direction (P) of the mounting movement having an inclination angle α₂ larger than an inclination angle α₁ of a lagging flank, wherein α₁ₓ, α₂ refer to the opening angle enclosed by a tangent towards the respective flank and the center longitudinal axis of the engaging ring (10), opposite to the mounting movement direction (P), and wherein the engaging ring (10) is fitted to permit a safe and simple plug-in assembly of the seal ring (2) on the support ring (1) and a slip-free transmission of a torque from the support ring (1) to the seal ring (2).

2. The mechanical seal assembly of claim 1, **characterized in that** the engaging ring is made of an elastomer material.

3. The mechanical seal assembly of claim 1, **characterized in that** the angle α₁ is between 15° and 60°, preferably 45°, and the angle α₂ is between 80° and 110°C, preferably 90°.

4. The mechanical seal assembly of claim 1, **characterized in that** the elevations (15) have rounded cones (19).

5. The mechanical seal assembly of claim 1, **characterized in that** the recess has a radial abutment surface in contact with an end face of the seal ring (2) such that heat transfer can be provided between the surfaces.

6. The mechanical seal assembly of claim 1, **characterized in that** the elevations (15) are configured to be deformed toward adjacent recesses (16) by effect of the external mounting force.

## Revendications

1. Garniture mécanique d'étanchéité comprenant un anneau de glissement (2) et une bague de support (1), sachant que la bague de support (1) présente un évidement ménagé du côté d'une de ses extrémités axiales et destiné à la réception en étanchéité et au montage à force de l'anneau de glissement, **caractérisée en ce qu'**une bague entraîneuse (10), constituée d'un matériau flexible et dotée d'un profilage ondulé sur son pourtour intérieur, est maintenue dans l'évidement, sachant qu'au moins les bosses (15) du profilage ondulé peuvent être amenées en engagement à force avec le pourtour extérieur de l'anneau de glissement (2), lorsque l'anneau de glissement (2) est déplacé dans la bague entraîneuse (10) par une force de montage externe, sachant que chaque bosse (15) présente un flanc (17), antérieur dans la direction (P) du mouvement de montage, ayant un angle d'inclinaison α₂ supérieur à l'angle d'inclinaison α1 d'un flanc postérieur, où α1, α2 sont les angles d'ouverture, à l'encontre de la direction (P) du mouvement de montage, formés par une tangente au flanc concerné et par l'axe médian longitudinal de la bague entraîneuse (10), et sachant que la bague entraîneuse (10) est conçue pour permettre un montage par emboîtement simple et fiable de l'anneau de glissement (2) sur la bague de support (1) et une transmission sans patinage d'un couple de rotation de la bague de support (1) sur l'anneau de glissement (2).

2. Garniture mécanique d'étanchéité selon la revendication 1, **caractérisée en ce que** la bague entraîneuse est constituée d'un matériau élastomère.

3. Garniture mécanique d'étanchéité selon la revendication 1, **caractérisée en ce que** l'angle α1 est compris entre 15° et 60°, de préférence est égal à 45°, et l'angle α2 est compris entre 80° et 110°, de préférence est égal à 90°.

4. Garniture mécanique d'étanchéité selon la revendication 1, **caractérisée en ce que** les bossages (15) possèdent des sommets arrondis (19).

5. Garniture mécanique d'étanchéité selon la revendication 1, **caractérisée en ce que** l'évidement présente une surface d'appui radiale avec laquelle une face frontale de l'anneau de glissement (2) se trouve en relation de transmission de chaleur par contact plan.

6. Garniture mécanique d'étanchéité selon la revendication 1, **caractérisée en ce que** les bosses (15) peuvent être déformées sous l'action de la force de montage externe dans des creux voisins (16).
